# EUROPEAN PATENT SPECIFICATION

(11) **EP 4 501 186 B1**
(45) Date of publication and mention of the grant of the patent: **26.11.2025**
(21) Application number: 24174476.2
(22) Date of filing: 07.05.2024
(51) Int. Cl.: A47J 42/06, A47J 42/46

(54) **GRINDING DEVICE AND GRINDING APPARATUS**
MAHLGERÄT UND MAHLVORRICHTUNG
DISPOSITIF DE BROYAGE ET APPAREIL DE BROYAGE

(30) Priority: 04.08.2023 CN 202322088016 U
(43) Date of publication of application: 05.02.2025
(73) Proprietor: Guangdong Midea Consumer Electric Manufacturing Co., Ltd., Foshan, Guangdong 528311 (CN)
(72) Inventor: ZHAO, Jinzhang, Foshan (CN); LIU, Lixin, Foshan (CN); ZHOU, Zhengjun, Foshan (CN)
(74) Representative: Ran, Handong

(56) References cited:
- WO-A1-2023/019900
- CN-U- 212 878 946
- US-B2- 10 791 875

## Description

### FIELD

The present invention relates to the field of grinding device technologies, and more particularly, to a grinding device and a grinding apparatus.

### BACKGROUND

Common ingredient grinding apparatus includes a coffee grinder, a bean grinder, and a pulverizing mill, which grinds bean ingredients (granular ingredients such as coffee beans, soybeans, peanuts, peppercorns, etc.) into a power of suitable coarseness and fineness through a grinding device. The grinding device mostly operates with a drive motor in conjunction with a transmission mechanism and a grinding assembly.

For some grinding apparatuses, such as the coffee grinder, the grinding device is only a functional device in the grinding apparatus, and is mounted at a device host, where a volume of the grinding device has a direct impact on a volume of the apparatus. Therefore, how to reduce the volume of the grinding device has become a hotspot in the research and development of the grinding device.

US10791875B2 discloses a coffee bean grinding system for coffee machine comprising a coffee bean grinding box, a lower grinding blade assembly disposed within the coffee bean grinding box and a gear box.

### SUMMARY

To solve a problem that a current grinding device is large in volume, the present application provides a grinding device and a grinding apparatus.

Aspects of the invention are set out in the independent claims. A grinding device is provided. The grinding device includes: a grinding assembly including a first mounting portion, a first grinding portion, and a second grinding portion cooperating with the first grinding portion to implement grinding; a power output assembly including a power element and a planetary gear mechanism, the planetary gear mechanism including a sun wheel, a planetary wheel, an internal gear ring, and a fixing frame, the sun wheel being connected to the power element in a transferring force manner, the planetary wheel being rotatably mounted at the fixing frame, and the fixing frame having an output portion configured to output power; a manipulating assembly connected to the first mounting portion. One of the first grinding portion and the second grinding portion is connected to the output portion in a transferring force manner, and another one of the first grinding portion and the second grinding portion is mounted at the manipulating assembly.

As can be seen from the above technical solution, the grinding device includes the power output assembly, the grinding assembly, the manipulating assembly, and the support assembly. The power output assembly is configured to drive the first grinding portion and the second grinding portion in the grinding assembly to rotate with respect to each other, thereby grinding bean ingredients. The power output assembly includes the power element and the planetary gear mechanism. The planetary gear mechanism has a large reduction ratio, occupies little space, and has stable power output, which can reduce noises of the grinding device. Power output from the power element is input by the sun wheel of the planetary gear mechanism, and is output, after being decelerated from the sun wheel to the planetary wheel to the internal gear ring in the planetary gear mechanism, by the output portion of the fixing frame to the grinding assembly. By arranging the fixing frame, on the one hand, the fixing frame is configured to mount the planetary wheel to realize a function of a planetary frame, and on the other hand, a torque can be directly output to the grinding assembly, i.e., in the grinding device, the planetary frame and a torque output component are integrated into the fixing frame. Therefore, compared to a transmission method in the related art in which the planetary wheel engages with an external gear ring to output torque, one component is saved, and a more simple structure and a more compact internal space of the planetary gear mechanism enable the volume of the grinding device to be reduced.

The first mounting portion is a hollow lower housing. The fixing frame is located in a cavity of the lower housing, and is rotatably connected to the first mounting portion through a bearing.

Since the first mounting portion serves as a mounting base for other components in the grinding assembly and the manipulating assembly, the fixing frame is rotatably connected to the first mounting portion through the bearing, which enables the fixing frame to be centered by the first mounting portion and the bearing to reduce an eccentricity of the fixing frame relative to the first grinding portion or the second grinding portion.

In some examples, the grinding assembly further includes a powder sprayer connected to the output portion in a transferring force manner, the powder sprayer being arranged below the first grinding portion and the second grinding portion, and the powder sprayer, the first grinding portion, and the second grinding portion being located in the cavity of the lower housing.

By arranging the powder sprayer, centrifugal force generated by rotation is utilized to throw out the powder obtained by grinding to an inner cavity wall of the lower housing, facilitating the discharge of the powder. The first grinding portion or the second grinding portion and the powder sprayer are connected to the output portion in a transferring force manner. The first grinding portion or the second grinding portion, the powder sprayer, and the output portion may only rotate without being axially displaced, eliminating an axial relative displacement of the planetary gear mechanism and the grinding assembly, and reducing noise.

In some examples, the first grinding portion is connected to the output portion in a transferring force manner, and the powder sprayer has a positioning cavity. The output portion protrudes outwardly and extends into the positioning cavity.

The first grinding portion has a limit cavity, and the powder sprayer is provided with a limit portion protruding outwardly. The limit portion extends into the limit cavity.

By arranging the positioning cavity, the limit cavity, and the limit portion, a positioning assembling between the first grinding portion, the powder sprayer, and the output portion is facilitated, and axial and circumferential limitations are provided.

In some examples, the grinding assembly further includes a powder blocking cover connected to the lower housing in a snapping manner. The powder blocking cover is arranged in the cavity of the lower housing and is located above the powder sprayer.

By arranging the powder blocking cover, the powder obtained by grinding falls on the powder sprayer and is thrown outward by an action of the powder sprayer.

In some examples, the manipulating assembly includes a second mounting portion and an adjusting portion rotatably connected to each other. The second mounting portion is at least partially movably nested with the first mounting portion, and the first mounting portion is threadedly connected to the adjusting portion.

By arranging that the first mounting portion is at least partially movably nested with the second mounting portion, an axial size of the grinding device can be significantly reduced. By arranging that the first mounting portion is connected to the second mounting portion through the adjusting portion, since the first mounting portion, the support assembly, and the planetary gear mechanism are connected, no displacement occurs in an axial direction. Therefore, when the adjusting portion is rotated, the adjusting portion drives the second mounting portion to move in the axial direction together, enabling that the first grinding portion and the second grinding portion that are respectively connected to the planetary gear mechanism and the second mounting portion generate an axial relative movement. An axial gap between the first grinding portion and the second grinding portion can be adjusted to change a particle volume of grinding powder. On the other hand, since the first mounting portion is connected to the second mounting portion through the adjusting portion in a threaded manner, only axial controlled displacement may occur between the first mounting portion and the second mounting portion, and active axial movement and active radial displacement will not occur during operation, which can ensure a grinding gap required by the first grinding portion and the second grinding portion and can avoid a collision and heating of the first grinding portion and the second grinding portion, solving problems of loud noise and grinding powder burning.

In some examples, the first mounting portion is provided with a plurality of threaded protrusions arranged at intervals in a circumferential direction. The plurality of threaded protrusions are threadedly connected to the adjusting portion.

By arranging threads of the first mounting portion as thread segments arranged at intervals in the circumferential direction, a threaded connection between the first mounting portion and the adjusting portion is not affected. Since the plurality of threaded protrusions are arranged at intervals, the first mounting portion can still be effectively connected to the adjusting portion under a condition that certain deformation occurs due to heat.

In some examples, the second mounting portion is a hollow upper housing, and the upper housing is provided with a second snap member. The upper housing is rotatably connected to the adjusting portion through the second snap member.

By arranging the upper housing to be rotatably connected to the adjusting portion, when the adjusting portion is rotated, the upper housing only moves in the axial direction along with the adjusting portion without rotating.

In some examples, the upper housing is movably arranged around the first mounting portion. The first mounting portion is provided with a powder outlet, and the upper housing is provided with a penetration hole opposite to the powder outlet.

In some examples, the planetary wheel includes a primary gear and a secondary gear that are arranged coaxially. The primary gear is engaged with the sun wheel, and the secondary gear is engaged with the internal gear ring. The primary gear is closer to the output portion than the secondary gear.

By arranging the planetary wheel to include the primary gear and the secondary gear, forming a following power transmission path: the power element to the sun wheel to the primary gear to the secondary gear to the fixing frame to the output portion to the first grinding portion/the second grinding portion. Since the primary gear is closer to the first grinding portion and the second grinding portion than the secondary gear, the power transmission is not transmitted along a straight line, and there is a reciprocating transmission process in an axial direction of the planetary wheel. It is possible to improve transmission stability of the planetary gear mechanism and significantly reduce an eccentricity of the fixing frame relative to the first grinding portion/the second grinding portion.

In some examples, the planetary gear mechanism further includes a planetary wheel axle. The planetary wheel has a through-hole extending in the axial direction. The planetary wheel axle rotatably extends into the through-hole and is fixedly connected to the fixing frame.

By arranging the planetary wheel to rotate around the planetary wheel axle, each of two ends of the planetary wheel axle is connected to the fixing frame, which conducts a rotation from the planetary wheel to the fixing frame.

In some examples, the planetary gear mechanism further includes a bottom housing. The bottom housing is fixedly connected to a casing of the power element and is connected to the first mounting portion. The internal gear ring of the planetary gear mechanism and the bottom housing are integrally formed.

By arranging the bottom housing, the planetary gear mechanism is mounted at the first mounting portion, and the internal gear ring is integrally formed on the bottom housing, enabling that the planetary gear mechanism has a more compact structure and a smaller volume.

In some example, the grinding device further includes a support assembly removably connected to the first mounting portion.

By arranging the support assembly to connect to the first mounting portion, the grinding device as a whole is mounted at a host of the grinding apparatus.

In some examples, the support assembly includes a hollow support frame, a sleeve, and an elastic member sleeved on the sleeve. The support frame has a mounting hole configured to mount the sleeve and the elastic member.

By arranging an elastic member between the support frame and the sleeve, it enables that when the grinding device is mounted at the host of the grinding apparatus, a vibration transmission at a mounting position can be reduced, and operating noise of the apparatus can be reduced.

In some examples, the support assembly is a hollow structure, and has an inner surface provided with a plurality of rotation stopping blocks arranged at intervals. The first mounting portion has a first snap member. The first mounting portion is snapped with the support assembly through the first snap member, and the first snap member is located between two adjacent rotation stopping blocks.

By arranging that the first mounting portion is snapped with the support assembly, which enables that the first mounting portion is convenient to assemble and disassemble. The rotation stopping block may prevent the first mounting portion from rotating, which enables that reaction force is provided for the first mounting portion when the adjusting portion is rotated.

According to one aspect of the present invention, the grinding apparatus is provided. The grinding apparatus includes the grinding device according to the above embodiment.

In some examples, the grinding apparatus includes a coffee grinder, a bean grinder, or a pulverizing mill.

### BRIEF DESCRIPTION OF THE DRAWINGS

In order to clearly explain technical solutions of the present application, drawings used in the description or the related art are briefly described below. The drawings as described below are merely some examples of the present application. Based on these drawings, other drawings can be obtained by those skilled in the art without creative effort.
FIG. 1 shows a schematic view of a structure of a grinding device in an example of the present invention.
FIG. 2 shows a full sectional view of the grinding device in FIG. 1.
FIG. 3 shows an exploded view of the grinding device in FIG. 1.
FIG. 4 shows a cross-sectional view of the grinding device of FIG. 1 at part A-A in FIG. 2.
FIG. 5 shows a cross-sectional view of the grinding device of FIG. 1 at part B-B in FIG. 2.
FIG. 6 shows a cross-sectional view of the grinding device of FIG. 1 at part C-C in FIG. 2.
FIG. 7 shows a cross-sectional view of the grinding device of FIG. 1 at part D-D in FIG. 2.
FIG. 8 shows an exploded view of a fixing frame and a planetary wheel in the grinding device of FIG. 1.
FIG. 9 shows a schematic view of a torque transmission path in a grinding device according to an example of the present invention.

Reference numerals of the accompanying drawings are explained as follows:
100, grinding assembly; 110, first mounting portion; 111, powder outlet; 110a, lower housing; 111a, first snap member; 112a, threaded protrusion; 120, first grinding portion; 121, limit cavity; 130, second grinding portion; 140, powder sprayer; 141, positioning cavity; 142, limit portion; 150, first screw rod; 151, gasket; 160, powder blocking cover; 170, sealing ring; 180, fixing frame; 181, handle.
200, support assembly; 210, support frame; 211, rotation stopping block; 212, mounting hole; 220, sleeve; 230, elastic member.
300, power output assembly; 310, power element; 310a, motor; 320, planetary gear mechanism; 321, fixing frame; 3211, main body; 3212, gear mounting cavity; 3213, pin hole; 3214, positioning portion; 3215, output portion; 322, sun wheel; 323, planetary wheel; 3231, primary gear; 3232, secondary gear; 3233, through-hole; 324, planetary wheel axle; 325, internal gear ring; 326, bottom housing; 327, third snap member; 330, bearing; 340, washer; 350, second screw rod.
400, manipulating assembly; 410, second mounting portion; 410a, upper housing; 411a, second snap member; 412a, penetration hole; 420, adjusting portion.

### DETAILED DESCRIPTION OF THE EMBODIMENTS

Technical solutions of the present invention will be clearly and completely described below in conjunction with accompanying drawings in the present invention.

In addition, reference numerals and/or reference letters may be repeated in different examples of the present invention. Such repetition is for the purpose of simplicity and clarity and does not indicate any relationship between various examples and/or arrangements in question. In addition, various examples of specific processes and materials are provided in the present invention.

In the related art, the grinding device is a functional device arranged in a grinding apparatus, a volume of the grinding device directly affects a volume of the apparatus. An excessively large grinding device will cause the grinding apparatus to be too large. The examples provide the grinding device and the grinding apparatus, which can at least solve a technical problem of large volume of a current grinding device to a certain extent. The present invention is described below with reference to specific examples in conjunction with the accompany drawings.

According to one aspect of the present invention, the grinding device is provided. The grinding device has a smaller volume than the grinding device in the related art, which solves the technical problem of large volume of the current grinding device to a certain extent.

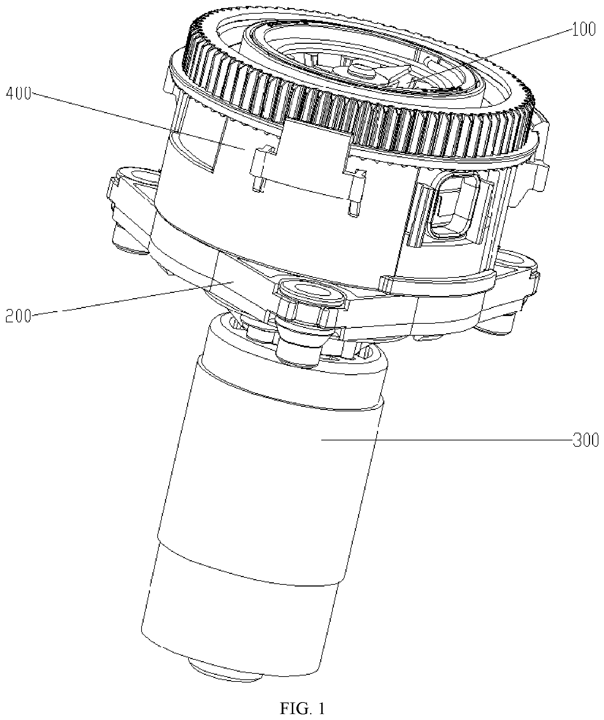

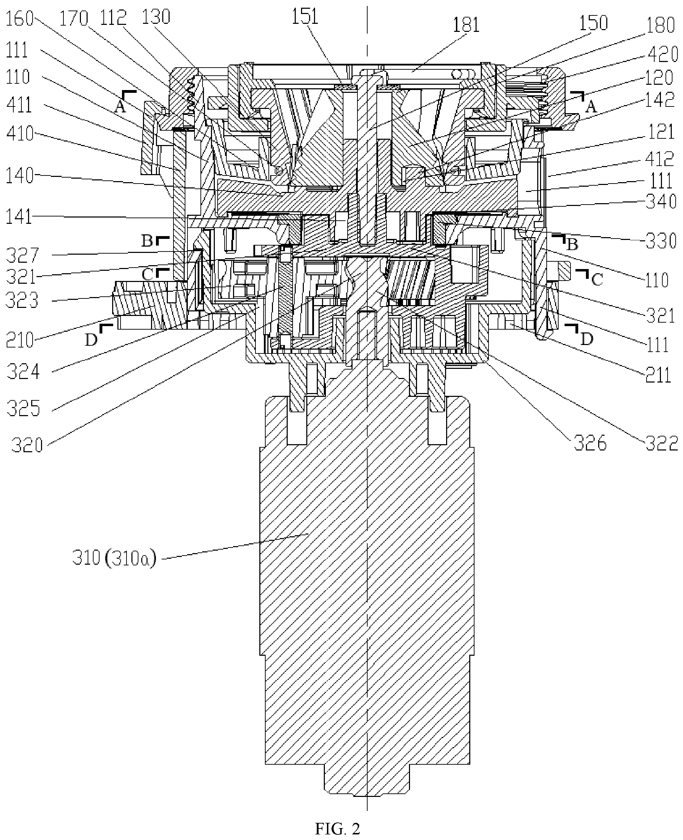

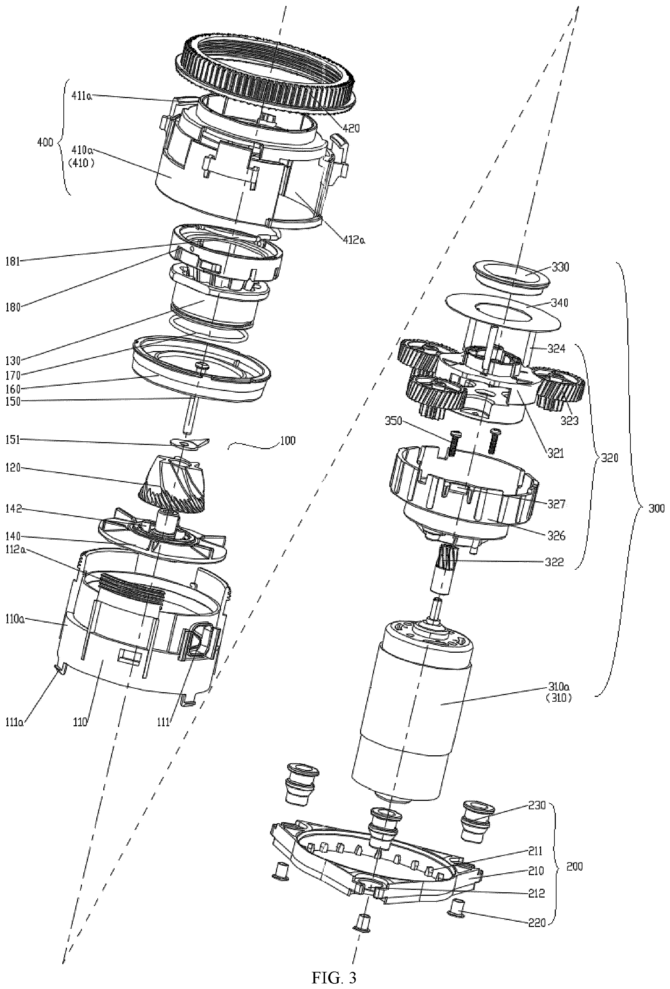

FIG. 1 shows an overall structure of the grinding device. In some examples, the grinding device according to the examples includes a grinding assembly 100, a power output assembly 300, and a manipulating assembly 400. As shown in FIG. 2 and FIG 3, the grinding assembly 100 includes a first mounting portion 110, a first grinding portion 120, and a second grinding portion 130. The first grinding portion 120 cooperates with the second grinding portion 130 to achieve grinding.

Other components in the grinding assembly 100 and the manipulating assembly 400 are mounted and fixed by the first mounting portion 110. In some examples, the first mounting portion 110 is connected to an external structure to achieve mounting and fixing of a whole grinding device. Referring to FIG. 1, in some examples, the grinding device further includes a support assembly 200 connected to the first mounting portion 110, and the whole grinding device is mounted and fixed by the support assembly 200.

Referring to FIG. 1, in some examples, the manipulating assembly 400 is connected to and at least partially nested with the first mounting portion 110. Since the first mounting portion 110 serves as a mounting base for other components of the grinding assembly 100 and the manipulating assembly 400, an axial size of the grinding device can be reduced by at least partially axially nesting the first mounting portion110 with the manipulating assembly 400. However, in the related art, the first mounting portion 110 and the manipulating assembly 400 are arranged in a non-axial nested manner, which may lead to an excessively long axial size of the grinding device, and further lead to an excessively large volume of the grinding device. Therefore, the first mounting portion 110 and the manipulating assembly 400 in the examples are at least partially axially nested, which can significantly reduce the axial size of the grinding device, thereby reducing the volume of the grinding device and solving the technical problem of large volume of the current grinding device to a certain extent.

The power output assembly 300 includes a power element 310 and a planetary gear mechanism 320. The planetary gear mechanism 320 is driven by the power element 310, and the planetary gear mechanism 320 is connected to the support assembly 200 and/or the first mounting portion 110, i.e., the planetary gear mechanism 320 can be mounted and fixed by the support assembly 200 or the first mounting portion 110. The planetary gear mechanism 320 may also be mounted and fixed simultaneously by the support assembly 200 and the first mounting portion 110. One of the first grinding portion 120 and the second grinding portion 130 is connected to a fixing frame 321 of the planetary gear mechanism 320 in a transferring force manner, and another one of the first grinding portion 120 and the second grinding portion 130 is mounted at the manipulating assembly 400, enabling that the power output assembly 300 may drive the first grinding portion 120 and the second grinding portion 130 of the grinding assembly 100 to rotate relatively to grind bean ingredients.

The power element 310 of the power output assembly 300 may be a motor 310a, or a hydraulic motor, etc. In some examples, the power element 310 of the power output assembly 300 is the motor 310a. Since the motor speed is high, the motor speed usually needs to be reduced and output to an actuator for use. The planetary gear mechanism 320 plays a role in reducing the motor speed, and a part of the planetary gear mechanism 320 may also play a role in increasing the torque.

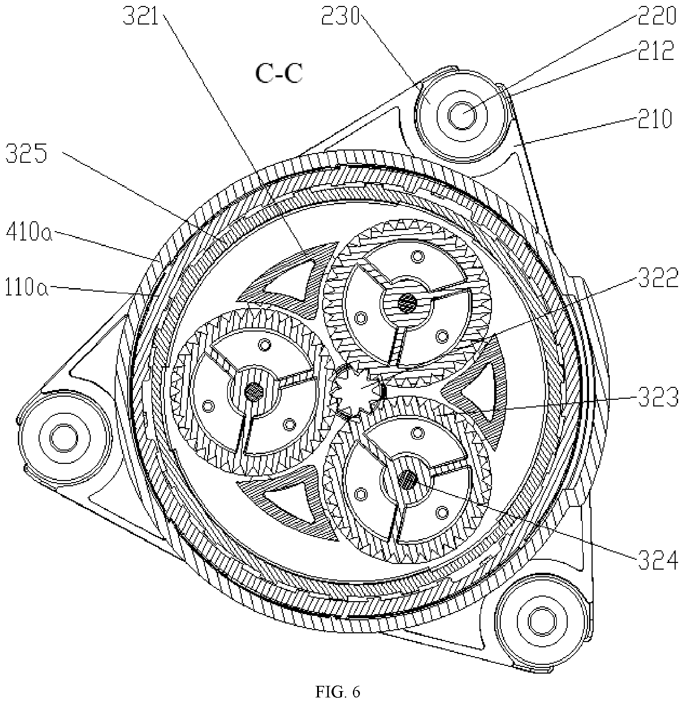

Referring to FIG. 2, FIG. 3, FIG. 6, FIG. 8, and FIG. 9, in some examples, the planetary gear mechanism 320 includes a sun wheel 322, a planetary wheel 323, a fixing frame 321, and an internal gear ring 325. The planetary wheel 323 is rotatably mounted at the fixing frame 321. The sun wheel 322 of the planetary gear mechanism 320 is connected to an output shaft of the motor 310a in a transferring force manner. Due to a need to ensure that the volume of the grinding device is not too large and at the same time to ensure a grinding effect, the planetary gear mechanism 320 is used as a speed reducer. The planetary gear mechanism 320 has a large reduction ratio, small occupied space, stable power output and other characteristics, and may also reduce noise of the grinding device. In some examples, the grinding device may also adopt other speed reducers, such as worm gear reduction mechanisms, reduction gear sets, etc.

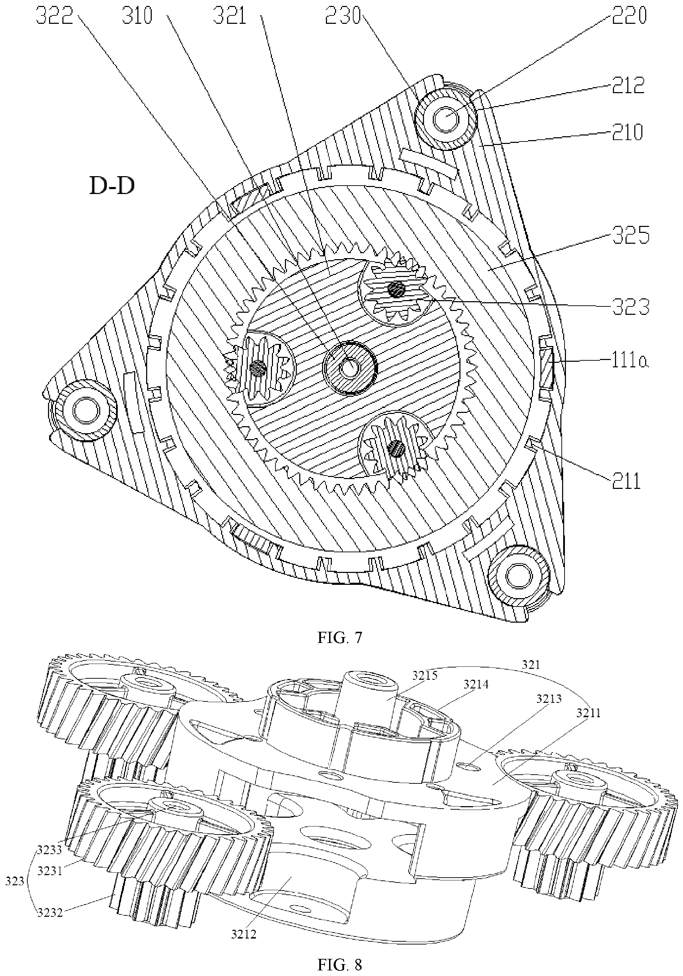

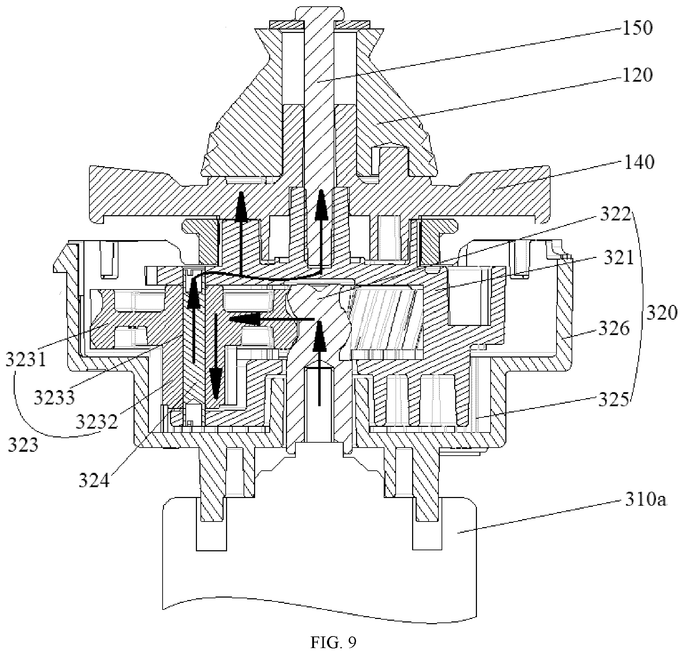

Referring to FIG. 8 and FIG. 9, in some examples, the fixing frame 321 of the planetary gear mechanism 320 is provided with an output portion 3215 for outputting the torque. Power output from the power element 310 is input by the sun wheel 322 of the planetary gear mechanism 320, and is output, after being decelerated from the sun wheel 322 to the planetary wheel 323 to the internal gear ring 325 in the planetary gear mechanism 320, by the output portion 3215 of the fixing frame 321 to the grinding assembly 100. By arranging the fixing frame 321, on the one hand, the fixing frame 321 is configured to mount the planetary wheel 323 to realize a function of the planetary frame, and on the other hand, the torque can be directly output to the grinding assembly 100, i.e., the planetary frame and the torque output portion are integrated into the fixing frame 321. In the related art, the planetary gear mechanism is engaged with an external gear ring through the planetary wheel to output torque. The planetary wheel is mounted at the planetary frame, and the planetary frame and the external gear ring are two independent components. The fixing frame 321 is equivalent to an integration of the planetary frame and the external gear ring in the related art, saving one component. The planetary gear mechanism 320 has a more simple structure and a more compact internal space, enabling that the volume of the grinding device can be reduced.

The planetary wheel 323 is rotatably mounted at the fixing frame 321, and the fixing frame 321 rotates around the sun wheel 322 along with a revolution of the planetary wheel 323. In some examples, referring to FIG. 8 and FIG. 9, the planetary wheel 323 is rotatably mounted at the fixing frame 321 by a planetary wheel axle 324. In some examples, the planetary wheel 323 has a through-hole 3233 extending in the axial direction and penetrating the planetary wheel 323. The planetary wheel axle 324 rotatably extends into the through-hole 3233, and has a clearance fit with the through-hole 3233. A bearing may also be provided between the planetary wheel axle 324 and the through-hole 3233 to achieve a relative rotation of the planetary wheel 323 and the planetary wheel axle 324.

In some examples, referring to FIG. 8, a specific structure of the fixing frame 321 is shown. The fixing frame 321 includes a main body 3211 and the output portion 3215. The output portion 3215 may be a structure protruding outwardly from the main body 3211, or a spline or a spline groove disposed on the main body 3211. The main body 3211 is provided with a plurality of gear mounting cavities 3212 and a plurality of pin holes 3213. The plurality of pin holes 3213 are in communication with the plurality of gear mounting cavities 3212. Each of two ends of the planetary wheel axle 324 is mounted at a corresponding pin hole 3213. The planetary wheel 323 is rotatably arranged at the gear mounting cavity 3212 through the planetary wheel axle 324, and is at least partially exposed outside the gear mounting cavity 3212 to be engaged with the internal gear ring 325. In some examples, the fixing frame 321 may have a plurality of weight reduction holes.

To improve transmission stability of the fixing frame 321, in some examples, the fixing frame 321 further includes a positioning portion 3214 arranged on the main body 3211. The output portion 3215 is located at an end of the main body 3211 in the axial direction, and the positioning portion 3214 may be arranged at a same end or an opposite end as the output portion 3215. In some examples, referring to FIG. 8, the positioning portion 3214 is a collar disposed coaxially with the output portion 3215 and on a same side as the output portion 3215, and the collar surrounds the output portion 3215 for cooperating with an inner ring of the bearing.

Referring to FIG. 8, a specific structure of the planetary wheel 323 in some examples is shown. The planetary wheel 323 includes a primary gear 3231 and a secondary gear 3232 that are sequentially arranged in the axial direction and have a common axis. The primary gear 3231 engages with the sun wheel 322, and the secondary gear 3232 engages with the internal gear ring 325. To reduce volume, in some examples, the primary gear 3231 and the secondary gear 3232 have different diameters, e.g., the primary gear 3231 has a larger diameter than the secondary gear 3232. For certain operating conditions that require the planetary gear mechanism 320 to be subjected to certain axial forces, in some examples, one of the primary gear 3231 and the secondary gear 3232 may be a helical gear and the other may be a spur gear.

The primary gear 3231 and the secondary gear 3232 of the planetary wheel 323 may be integrally formed, i.e., the primary gear 3231 and the secondary gear 3232 are directly machined from blank. Each of the primary gear 3231 and the secondary gear 3232 has a concentric through-hole to form the through-hole 3233 of the planetary wheel 323. The planetary wheel axle 324 may rotatably extend into the through-hole 3233. The two ends of the planetary wheel axle 324 are fixedly connected to the fixing frame 321, as shown in FIG. 8 and FIG. 9. In some examples, the primary gear 3231 and the secondary gear 3232 may be independently formed and then mounted at a same central shaft to transfer torque through a key connection. The central shaft may be rotatably connected to the fixing frame 321, for example, the central shaft may rotatably extend into the pin hole 3213 of the fixing frame 321.

In some examples, referring to FIG. 8, the planetary wheel 323 is parallel to the output portion 3215, and the primary gear 3231 is closer to the output portion 3215 than the secondary gear 3232, forming a following power transmission path: the power element 310 to the sun wheel 322 to the primary gear 3231 to the secondary gear 3232 to the fixing frame 321 to the output portion 3215 to the first grinding portion 120/the second grinding portion 130. Since the primary gear 3231 is closer to the output portion 3215 than the secondary gear 3232, the torque in a torque transmission process is not transmitted along a straight line, and there is a reciprocating transmission process in the axial direction of the planetary wheel. The torque transmission path is shown by an arrow in FIG. 9, which can improve the transmission stability of the planetary gear mechanism 320 and significantly reduce an eccentricity of the fixing frame 321 relative to the first grinding portion 120/second grinding portion 130.

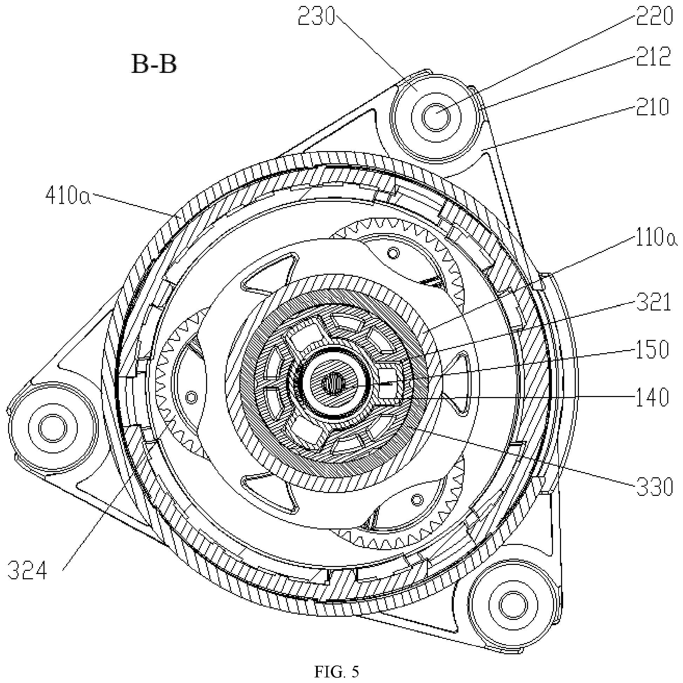

In some examples, as shown in FIG. 3 and FIG. 5, the power output assembly 300 further includes a washer 340 arranged between a powder sprayer 140 and a bearing 330 to ensure a rotation effect of the powder sprayer 140 through the washer 340 and avoid interference between the powder sprayer 140 and the bearing 330.

To achieve a fixed arrangement of the power output assembly 300 on the grinding device, in some examples, as shown in FIG. 2, FIG. 3, and FIG. 7, the planetary gear mechanism 320 further includes a bottom housing 326 fixedly connected to a casing of the power element 310 and connected to the support assembly 200 and/or the first mounting portion 110 to achieve a fixed arrangement of the power output assembly 300 through the housing. Considering that the internal gear ring 325 in the planetary gear mechanism 320 does not need to rotate, in some examples, the internal gear ring 325 and the bottom housing 326 of the planetary gear mechanism 320 are integrally formed. For example, an inner surface of the bottom housing 326 is directly processed to obtain the internal ring gear 325. The internal gear ring 325 and the bottom housing 326 of the planetary gear mechanism 320 may also be connected and formed by welding, or clamping, etc.

To realize a fixed connection between the bottom housing 326 and the casing of the power element 310, in some examples, as shown in FIG. 3, the power output assembly 300 further includes a second screw rod 350. The bottom housing 326 has a through-hole, and the casing of the power element 310 has a threaded hole. The second screw rod 350 penetrates the through-hole of the bottom housing 326 and is connected to the threaded hole of the casing of the power element 310, to achieve the fixed connection between the bottom housing 326 and the casing of the power element 310 through the second screw rod 350.

In some examples, as shown in FIG. 2, the bottom housing 326 is connected to the first mounting portion 110 to install and fix the bottom housing 326 to the first mounting portion 110. Further, the bottom housing 326 is provided with a third snap member 327. The third snap member 327 of the bottom housing 326 is snapped with the first mounting portion 110, to facilitate a disassembling and assembling between the bottom housing 326 and the first mounting portion 110.

To enable that first grinding portion 120 and the second grinding portion 130 to adjust a grinding gap, in some examples, as shown in FIG. 3, the manipulating assembly 400 includes a second mounting portion 410 and an adjusting portion 420. The second mounting portion 410 is connected to the adjusting portion 420. One of the first grinding portion 120 and the second grinding portion 130 is connected to the fixing frame 321 of the planetary gear mechanism 320 in a transferring force manner, and another one of the first grinding portion 120 and the second grinding portion 130 is mounted at the second mounting portion 410 of the manipulating assembly 400. Referring to FIG. 2, in some examples, considering that the first mounting portion 110 serves as the mounting base for other components in the grinding assembly 100, the first mounting portion 110 is arranged closer to the first grinding portion 120 and the second grinding portion 130 than the second mounting portion 410 for ease of mounting. The second mounting portion 410 is movably arranged around the first mounting portion 110, and a nested arrangement between the manipulating assembly 400 and the first mounting portion 110 is realized by the second mounting portion 410. In other examples, the first mounting portion 110 may be movably arranged around the second mounting portion 410, and the first mounting portion 110 partially extends into an inner cavity of the second mounting portion 410 to connect to other components of the grinding assembly 100.

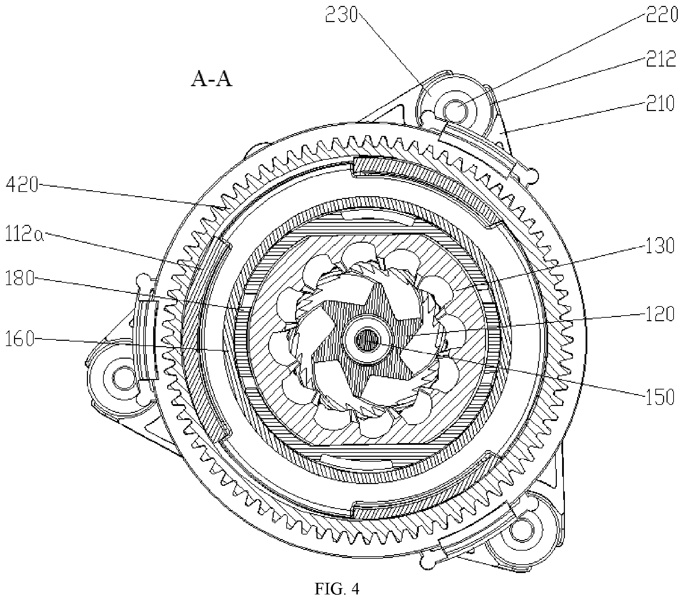

Referring to FIG. 2 and FIG. 4, the first mounting portion 110 is threadedly connected to the adjusting portion 420. The first mounting portion 110 is provided with external threads, and the adjusting portion 420 is provided with internal threads. The internal threads of the adjusting portion 420 are connected to the external threads of the first mounting portion 110. In other examples, the first mounting portion 110 may be arranged around the second mounting portion 410. Correspondingly, the first mounting portion 110 is provided with internal threads, and the adjusting portion 420 is provided with external threads. The external threads of the adjusting portion 420 are connected to the internal threads of the first mounting portion 110.

In some examples, on the one hand, by arranging the first mounting portion 110 movably nested with the second mounting portion 410 and connected to the second mounting portion 420 by the adjusting portion 420, since the first mounting portion 110, the support assembly 200, and the planetary gear mechanism 320 are connected, no displacement occurs in the axial direction. Therefore, when the adjusting portion 420 is rotated, the adjusting portion 420 drives the second mounting portion 410 to move in the axial direction together, enabling that the first grinding portion 120 and the second grinding portion 130 that are respectively connected to the planetary gear mechanism 320 and the second mounting portion 410 generate an axial relative movement. An axial gap between the first grinding portion 120 and the second grinding portion 130 may be adjusted to change a particle volume of grinding powder. On the other hand, since the first mounting portion 110 is connected to the second mounting portion 410 through the adjusting portion 420 in a threaded manner, only axial controlled displacement may occur between the first mounting portion 110 and the second mounting portion 410, and active axial movement and active radial displacement will not occur during operation, which can ensure a grinding gap required by the first grinding portion 120 and the second grinding portion 130 and can avoid a collision and heating of the first grinding portion 120 and the second grinding portion 130, solving problems of loud noise and grinding powder burning.

In some example, as shown in FIG. 2, the first mounting portion 110 is a hollow lower housing 110a to facilitate an arrangement of other components in the grinding assembly 100 and the planetary gear mechanism 320 in the first mounting portion 110. Meanwhile, to facilitate an arrangement of the first mounting portion 110 in the support assembly 200, the support assembly 200 is provided with a hollow structure.

Referring to FIG. 3 and FIG. 7, in some examples, to realize a stable connection between the lower housing 110a and the support assembly 200, the lower housing 110a is provided with a first snap member 111a, and is snapped with the support assembly 200 through the first snap member 111a. Therefore, by arranging that the lower housing 110a is snapped with the support assembly 200, a stable connection between the housing and the support assembly 200 is realized, which also facilitates the disassembling and assembling of the lower housing 110a on the support assembly 200.

Referring to FIG. 3 and FIG. 7, in some examples, to limit a rotation of the lower housing 110a on the support assembly 200, a plurality of rotation stopping blocks 211 are arranged on an inner surface of the support assembly 200 at intervals. The first snap member 111a of the lower housing 110a is located between two adjacent rotation stopping blocks 211 to prevent the rotation of the lower housing 110a around the axial direction by providing the rotation stopping blocks 211. Meanwhile, since the first mounting portion 110 is threadedly connected to the adjusting portion 420, after the rotation of the lower housing 110a is limited by the plurality of rotation stopping blocks 211, a reaction force may be provided for the lower housing 110a when the adjusting portion 420 is rotated, which enables that the second mounting portion 410 may move better in the axial direction on the first mounting portion 110.

To better discharge grinding powder, in some examples, as shown in FIG. 2 and FIG. 3, the grinding assembly 100 further includes a powder sprayer 140. The powder sprayer 140 is connected to the fixing frame 321 in a transferring force manner. The powder sprayer 140 is arranged below the first grinding portion 120 and the second grinding portion 130. Each of the powder sprayer 140, the first grinding portion 120, and the second grinding portion 130 is located in a cavity of the lower housing 110a. By arranging the powder sprayer 140, powder ground by the first grinding portion 120 and the second grinding portion 130 falls onto the powder sprayer140, and a centrifugal force generated by a rotation of the powder sprayer140 is used to throw out the powder to the inner cavity wall of the lower housing 110a, facilitating that the powder is discharged. In addition, since each of the first grinding portion 120 or the second grinding portion 130 and the powder sprayer 140 is connected to the fixing frame 321 in a transmitting force manner, the first grinding portion 120 or the second grinding portion 130, the powder sprayer 140, and the fixing frame 321 may only rotate around the axial direction without moving in the axial direction, eliminating an axial relative displacement of the planetary gear mechanism 320 and the grinding assembly 100 and reducing noise during the operation.

As for a specific arrangement of the first grinding portion 120 and the second grinding portion 130, in some examples, as shown in FIG. 2, the first grinding portion 120 is connected to the fixing frame 321 in a transferring force manner. Correspondingly, the second grinding portion 130 is connected to the second mounting portion 410 of the manipulating assembly 400, to form a relative rotation arrangement relationship between the first grinding portion 120 rotating and the second grinding portion 130 being fixed. Referring to FIG. 2 and FIG. 5, in some examples, the fixing frame 321 is connected to the first mounting portion 110 through the bearing 330 to achieve a rotational connection between the fixing frame 321 and the first mounting portion 110. The powder sprayer 140 has a positioning cavity 141. An upper end of the fixing frame 321 extends into the positioning cavity 141, and the first grinding portion 120 has a limit cavity 121. The powder sprayer 140 has a limit portion 142 protruding outwardly, and the limit portion 142 extends into the limit cavity 121. Therefore, by arranging the positioning cavity 141, the limit cavity 121, and the limit portion 142, the upper end of the fixing frame 321 is inserted into the positioning cavity 141 of the powder sprayer 140, and the limit portion 142 of the powder sprayer 140 is inserted into the limit cavity 121 of the first grinding portion 120, thereby realizing a positioning assembling between the first grinding portion 120, the powder sprayer 140, and the fixing frame 321. The fixing frame 321 is enabled to rotate the powder sprayer 140 and the first grinding portion 120 simultaneously. In addition, by arranging the positioning cavity 141, the limit cavity 121, and the limit portion 142, an axial and circumferential limiting effect is also performed on the first grinding portion 120, the powder sprayer 140, and the fixing frame 321.

To realize a stable connection between the first grinding portion 120, the powder sprayer 140, and the fixing frame 321, in some examples, as shown in FIG. 2 and FIG. 3, the grinding assembly 100 further includes a first screw rod 150. The powder sprayer 140 has a through-hole, and the fixing frame 321 has a threaded hole. The first screw rod 150 penetrates the through-hole of the powder sprayer 140 and is connected to the threaded hole of the fixing frame 321, to stably connect the first grinding portion 120, the powder sprayer 140, and the fixing frame 321 together through the first screw rod 150. In addition, to fix the first screw rod 150 better and prevent the first screw rod 150 from loosening, a gasket 151 is arranged around the first screw rod 150, and is disposed between a head of the first screw rod 150 and the first grinding portion 120.

During an operation of the grinding device, the grinding device will generate heat due to internal grinding, and the lower housing 110a will undergo certain deformation under a condition of heating, affecting a threaded connection between the lower housing 110a and the adjusting portion 420. In some examples, as shown in FIG. 3, the lower housing 110a is provided with a plurality of threaded protrusions 112a arranged at intervals in a circumferential direction. The plurality of threaded protrusions 112a are threadedly connected to the adjusting portion 420. Therefore, by arranging threads of the lower housing 110a as thread segments arranged at intervals in the circumferential direction, a threaded connection between the lower housing 110a and the adjusting portion 420 is not affected. Since the plurality of threaded protrusions 112a are arranged at intervals, the lower housing 110a may still be effectively connected to the adjusting portion 420 under a condition that certain deformation occurs due to heating. In this case, a circumferential gap of the plurality of threaded protrusions 112a becomes smaller to ensure that the lower housing 110a is threadedly connected to the adjusting portion 420. In the examples, the lower housing 110a is provided with three threaded protrusions 112a. The lower housing 110a may also be provided with two, four, five, six and other number of threaded protrusions 112a.

To enable the powder ground by the first grinding portion 120 and the second grinding portion 130 to fall better onto the powder sprayer140, in some examples, as shown in FIG. 2 and FIG. 3, the grinding assembly 100 further includes a powder blocking cover 160. The powder blocking cover 160 is snapped with the plurality of threaded protrusions 112a, and is disposed in the cavity of the lower housing 110a and above the powder sprayer 140. Due to a relative rotation between the first grinding portion 120 and the second grinding portion 130, a part of the ground powder is thrown onto a cavity surface of the lower housing 110a and cannot fall onto the powder sprayer 140. Even a part of the powder is thrown out of the lower housing 110a through a gap between the plurality of threaded protrusions 112a of the lower housing 110a. Therefore, by arranging the powder blocking cover 160, the powder obtained by grinding is limited to an interior of the powder blocking cover 160, and may fall on the powder sprayer 140 as much as possible. Then, the powder is thrown outwardly in a uniform manner by a centrifugal force of the powder sprayer 140.

In some examples, as shown in FIG. 2, the powder blocking cover 160 is arranged around the second grinding portion 130. To ensure sealing between the powder blocking cover 160 and the second grinding portion 130, the grinding assembly 100 further includes a sealing ring 170 arranged between the powder blocking cover 160 and the second grinding portion 130, to avoid powder leakage from the powder blocking cover 160 and the second grinding portion 130.

In some examples, as shown in FIG. 3, the second mounting portion 410 is a hollow upper housing 410a when specific arranging the operating assembly, enabling that the upper housing 410a is movably arranged around the lower housing 110a. Further, the upper housing 410a is provided with a second snap member 411a, and the upper housing 410a is rotatably connected to the adjusting portion 420 through the second snap member 411a, enabling that the upper housing 410a may be driven to move in the axial direction only by rotating the adjusting portion 420. Furthermore, by nesting the upper housing 410a with the lower housing 110a in the axial direction, the upper housing 410a may only move in the axial direction on the lower housing 110a and cannot rotate around the axial direction, thereby ensuring connection stability between the upper housing 410a and the lower housing 110a. Thus, by arranging the upper housing 410a rotatably connected to the adjusting portion 420, when the adjusting portion 420 is rotated, the upper housing 410a only moves in the axial direction along with the adjusting portion 420 without rotating.

To realize a connection between the second grinding portion 130 and the upper housing 410a, in some examples, as shown in FIG. 3, the grinding assembly 100 further includes a fixing frame 180. The second grinding portion 130 is snapped with the fixing frame 180, and the fixing frame180 is snapped with the upper housing 410a, enabling that the second grinding portion 130 is fixed to the upper housing 410a through the fixing frame 180 and that disassembling and assembling are convenient. In addition, the grinding assembly 100 further includes a handle 181 arranged on the fixing frame 180. Therefore, after using the grinding device, the second grinding portion 130 is removed from the grinding device by the handle 181 to clean an interior of the grinding device.

To discharge the ground powder in the grinding device, in some examples, the upper housing 410a has a penetration hole 412a, and the first mounting portion 110 is provided with a powder outlet 111. The penetration hole 412a of the upper housing 410a is provided corresponding to the powder outlet 111 of the first mounting portion 110. The second mounting portion 410 is movably arranged around the first mounting portion 110, i.e., the upper housing 410a is movably arranged around the lower housing 110a. The powder ground by the first grinding portion 120 and the second grinding portion 130 falls onto the powder sprayer 140, and is thrown out of the grinding device sequentially through the penetration hole 412a of the upper housing 410a and the powder outlet 111 of the first mounting portion 110 by the centrifugal force of the powder sprayer 140, thereby realizing the powder discharge of the grinding device.

In some examples, the whole grinding device is mounted at the grinding apparatus through the support assembly 200. Since a relative rotation occurs between the first grinding portion 120 and the second grinding portion 130, when the grinding device operates, to grind the bean ingredients located between the first grinding portion 120 and the second grinding portion 130, this process generates vibration and noise, which is a major factor affecting the user experience. Referring to FIG. 3 and FIG. 7, in some examples, the support assembly 200 includes a support frame 210, a sleeve 220, and an elastic member 230. Since the support frame 210 is hollow, the lower housing 110a and the planetary gear mechanism 320 are arranged in the support frame 210, which enables that the first snap member 111a of the lower housing 110a is snapped with the support frame 210, and the rotation stopping block 211 is disposed on an inner circumferential surface of the support frame 210. The support frame 210 has a mounting hole 212 configured to mount the sleeve 220 and the elastic member 230. The elastic member 230 is arranged around the sleeve 220 and mounted at the mounting hole 212 of the support frame 210. By arranging the elastic member 230 between the support frame 210 and the sleeve 220, when the grinding device is mounted on the host of the grinding apparatus, a vibration transmission at a mounting position can be reduced, and the noise of the apparatus can be reduced.

Based on a same inventive concept, the grinding apparatus is provided. The grinding apparatus includes the grinding device in the example of the above example. The grinding device is a functional device arranged in the grinding apparatus. Since the first mounting portion 110 in the grinding device is at least partially nested with the manipulating assembly 400 in the axial direction, the axial size of the grinding device can be significantly reduced, which enables that the volume of the grinding device is reduced, and the volume of the grinding apparatus is correspondingly reduced. The technical problem that the volume of the grinding apparatus is large due to the large volume of the current grinding device is solved to a certain extent.

In some examples, the grinding apparatus is a coffee grinder. Coffee beans fall between the first grinding portion 120 and the second grinding portion 130 through a bean bin, and are ground into coffee powder through a relative rotation between the first grinding portion 120 and the second grinding portion 130. The coffee powder is discharged to a powder outlet 111 of the first mounting portion 110 through the powder sprayer 140. The powder outlet 111 of the first mounting portion 110 is provided with a powder outlet pipe configured to convey the coffee powder to a brewing assembly.

In some examples, the grinding apparatus is a pulverizing mill. Bean ingredients such as dried prickly ash and dried peanuts are placed between the first grinding portion 120 and the second grinding portion 130, and powdery ingredients such as prickly ash powder and peanut powder can be obtained from the powder outlet 111 of the first mounting portion 110. In other examples, the grinding apparatus may also be a bean grinder, a soybean milk machine, etc.

Unless expressly specified and defined otherwise, the first feature "on" or "under" the second feature may include a direct contact between the first feature and the second feature, or an indirect contact between the first feature and the second feature, but by means of another feature between the first feature and the second feature. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

It should be understood that the orientation or the position indicated by terms such as "center", "longitudinal", "lateral", "length", "width", "thickness", "above", "below", "front", "rear", "left", "right", "vertical", "horizontal", "top", "bottom", "inner", "outer", "clockwise", "anti-clockwise", "axial", "radial", and "circumferential" should be construed to refer to the orientation and the position as shown in the drawings in discussion, and is only for the convenience of describing the present invention and simplifying the description, rather than indicating or implying that the pointed device or element must have a specific orientation, or be constructed and operated in a specific orientation, and therefore cannot be understood as a limitation.

It should be noted that all orientation indications in examples are configured to explain only a relative positional relationship, movement, etc., between the components in a particular attitude. If the particular attitude is changed, the orientation indications are changed accordingly.

Unless otherwise clearly specified and limited, terms such as "connect", "fix" and the like should be understood in a broad sense. For example, "connect" may be a fixed connection or a detachable connection or connection as one piece; mechanical connection or electrical connection; direct connection or indirect connection through an intermediate; internal communication of two components or the interaction relationship between two components, unless otherwise clearly specified and limited. For those skilled in the art, the specific meaning of the above-mentioned terms in the examples can be understood according to specific circumstances.

In addition, descriptions such as "first" and "second" are only used for descriptive purposes, and cannot be understood as indicating or implying relative importance or implicitly indicating the number of indicated technical features. Therefore, the features associated with "first" and "second" may explicitly or implicitly include one or more of the features. In the description "plurality" means at least two, unless otherwise specifically defined.

Description of terms such as "some examples", "an example", "a specific example" and "some examples" means that specific features, structures, materials, or characteristics described in conjunction with the example are included in at least one example. In this specification, the schematic representations of the above terms do not necessarily refer to the same example. Moreover, the described specific features, structures, materials, or characteristics may be combined in any one or more examples in a suitable manner, as long as the resulting embodiment is encompassed by the scope of the appended claims. In addition, those skilled in the art may join and combine different examples or examples described in the specification as long as the resulting embodiment is is encompassed by the scope of the appended claims.

## Claims

1. A grinding device, comprising:
a grinding assembly (100) comprising a first mounting portion (110), a first grinding portion (120), and a second grinding portion (130) cooperating with the first grinding portion (120) to implement grinding;
a power output assembly (300) comprising a power element (310) and a planetary gear mechanism (320), the planetary gear mechanism (320) comprising a sun wheel (322), a planetary wheel (323), an internal gear ring (325), and a fixing frame (321), the sun wheel (322) being connected to the power element (310) in a transferring force manner, the planetary wheel (323) being rotatably mounted at the fixing frame (321), and the fixing frame (321) having an output portion (3215) configured to output power;
a manipulating assembly (400) connected to the first mounting portion (110),
wherein one of the first grinding portion (120) and the second grinding portion (130) is connected to the output portion (3215) in a transferring force manner, and another one of the first grinding portion (120) and the second grinding portion (130) is mounted at the manipulating assembly (400),
**characterized in that**,
the first mounting portion (110) is a hollow lower housing (110a), and
the fixing frame (321) is located in a cavity of the lower housing (110a), and is rotatably connected to the first mounting portion (110) through a bearing (330).

2. The grinding device according to claim 1, wherein the grinding assembly (100) further comprises:
a powder sprayer (140) connected to the output portion (3215) in a transferring force manner, the powder sprayer (140) being arranged below the first grinding portion (120) and the second grinding portion (130), and the powder sprayer (140), the first grinding portion (120), and the second grinding portion (130) being located in the cavity of the lower housing (110a); and
a powder blocking cover (160) connected to the lower housing (110a) in a snapping manner, the powder blocking cover (160) being arranged in the cavity of the lower housing (110a) and located above the powder sprayer (140).

3. The grinding device according to claim 2, wherein:
the first grinding portion (120) is connected to the output portion (3215) in a transferring force manner, and the powder sprayer (140) has a positioning cavity (141), the output portion (3215) protruding outwardly and extending into the positioning cavity (141); and
the first grinding portion (120) has a limit cavity (121), and the powder sprayer (140) is provided with a limit portion (142) protruding outwardly, the limit portion (142) extending into the limit cavity (121).

4. The grinding device according to any one of claims 1 to 3, wherein the manipulating assembly (400) comprises a second mounting portion (410) and an adjusting portion (420) rotatably connected to each other, wherein:
the second mounting portion (410) is at least partially movably nested with the first mounting portion (110); and
the first mounting portion (110) is threadedly connected to the adjusting portion (420).

5. The grinding device according to any one of claims 1 to 4, wherein the planetary wheel (323) comprises a primary gear (3231) and a secondary gear (3232) that are arranged sequentially in an axial direction, the primary gear (3231) being engaged with the sun wheel (3222), the secondary gear (3232) being engaged with the internal gear ring (325), and the primary gear (3231) being closer to the output portion (3215) than the secondary gear (3232).

6. The grinding device according to claim 5, wherein:
the planetary gear mechanism (320) further comprises a planetary wheel axle (324); and
the planetary wheel (323) has a through-hole (3233) extending in the axial direction, the planetary wheel axle (324) rotatably extending into the through-hole (3233) and being fixedly connected to the fixing frame (321).

7. The grinding device according to claim 5 or 6, wherein:
the planetary gear mechanism (320) further comprises a bottom housing (326), the bottom housing (326) being fixedly connected to a casing of the power element (310) and being connected to the first mounting portion (110); and
the internal gear ring (325) and the bottom housing (326) are integrally formed.

8. The grinding device according to any one of claims 1 to 7, further comprising a support assembly (200) removably connected to the first mounting portion (110).

9. A grinding apparatus, comprising the grinding device according to any one of claims 1 to 8.

10. The grinding apparatus according to claim 9, wherein the grinding apparatus comprises a coffee grinder, a bean grinder, or a pulverizing mill.

## Patentansprüche

1. Mahlvorrichtung, umfassend:
eine Mahlanordnung (100), umfassend einen ersten Befestigungsabschnitt (110), einen ersten Mahlabschnitt (120) und einen zweiten Mahlabschnitt (130), der mit dem ersten Mahlabschnitt (120) zusammenwirkt, um Mahlen zu implementieren;
eine Leistungsabgabeanordnung (300), umfassend ein Leistungselement (310) und einen Planetenradmechanismus (320), wobei der Planetenradmechanismus (320) ein Sonnenrad (322), ein Planetenrad (323), einen Innenzahnkranz (325) und einen Fixierungsrahmen (321) umfasst, wobei das Sonnenrad (322) auf Kraft übertragende Weise mit dem Leistungselement (310) verbunden ist, das Planetenrad (323) an dem Fixierungsrahmen (321) drehbar befestigt ist und der Fixierungsrahmen (321) einen zum Abgeben von Leistung konfigurierten Abgabeabschnitt (3215) aufweist;
eine Manipulieranordnung (400), die mit dem ersten Befestigungsabschnitt (110) verbunden ist,
wobei einer von dem ersten Mahlabschnitt (120) und dem zweiten Mahlabschnitt (130) auf Kraft übertragende Weise mit dem Abgabeabschnitt (3215) verbunden ist und ein anderer von dem ersten Mahlabschnitt (120) und dem zweiten Mahlabschnitt (130) an der Manipulieranordnung (400) befestigt ist,
**dadurch gekennzeichnet, dass**
der erste Befestigungsabschnitt (110) ein hohles unteres Gehäuse (110a) ist und
sich der Fixierungsrahmen (321) in einer Höhlung des unteren Gehäuses (110a) befindet und über ein Lager (330) mit dem ersten Befestigungsabschnitt (110) drehbar verbunden ist.

2. Mahlvorrichtung nach Anspruch 1, wobei die Mahlanordnung (100) ferner Folgendes umfasst:
eine Pulversprüheinrichtung (140), die auf Kraft übertragende Weise mit dem Abgabeabschnitt (3215) verbunden ist, wobei die Pulversprüheinrichtung (140) unter dem ersten Mahlabschnitt (120) und dem zweiten Mahlabschnitt (130) angeordnet ist und sich die Pulversprüheinrichtung (140), der erste Mahlabschnitt (120) und der zweite Mahlabschnitt (130) in der Höhlung des unteren Gehäuses (110a) befinden; und
eine Pulverblockierabdeckung (160), die auf schnappende Weise mit dem unteren Gehäuse (110a) verbunden ist, wobei die Pulverblockierabdeckung (160) in der Höhlung des unteren Gehäuses (110a) angeordnet ist und sich über der Pulversprüheinrichtung (140) befindet.

3. Mahlvorrichtung nach Anspruch 2, wobei:
der erste Mahlabschnitt (120) auf Kraft übertragende Weise mit dem Abgabeabschnitt (3215) verbunden ist und die Pulversprüheinrichtung (140) eine Positionierungshöhlung (141) aufweist, der Abgabeabschnitt (3215) nach außen ragt und sich in die Positionierungshöhlung (141) erstreckt; und
der erste Mahlabschnitt (120) eine Begrenzungshöhlung (121) aufweist und die Pulversprüheinrichtung (140) mit einem nach außen ragenden Begrenzungsabschnitt (142) versehen ist, wobei sich der Begrenzungsabschnitt (142) in die Begrenzungshöhlung (121) erstreckt.

4. Mahlvorrichtung nach einem der Ansprüche 1 bis 3, wobei die Manipulieranordnung (400) einen zweiten Befestigungsabschnitt (410) und einen Verstellabschnitt (420), die miteinander drehbar verbunden sind, umfasst, wobei:
der zweite Befestigungsabschnitt (410) mindestens teilweise bewegbar mit dem ersten Befestigungsabschnitt (110) verschachtelt ist; und
der erste Befestigungsabschnitt (110) mit dem Verstellabschnitt (420) verschraubt ist.

5. Mahlvorrichtung nach einem der Ansprüche 1 bis 4, wobei das Planetenrad (323) ein Primärrad (3231) und ein Sekundärrad (3232) umfasst, die in einer Axialrichtung hintereinander angeordnet sind, wobei das Primärrad (3231) mit dem Sonnenrad (3222) verzahnt ist, das Sekundärrad (3232) mit dem Innenzahnkranz (325) verzahnt ist und das Primärrad (3231) dem Abgabeabschnitt (3215) näher ist als das Sekundärrad (3232).

6. Mahlvorrichtung nach Anspruch 5, wobei:
der Planetenradmechanismus (320) ferner eine Planetenradachse (324) umfasst; und
das Planetenrad (323) ein sich in der Axialrichtung erstreckendes Durchgangsloch (3233) aufweist, wobei sich die Planetenradachse (324) drehbar in das Durchgangsloch (3233) erstreckt und feststehend mit dem Fixierungsrahmen (321) verbunden ist.

7. Mahlvorrichtung nach Anspruch 5 oder 6, wobei:
der Planetenradmechanismus (320) ferner ein Bodengehäuse (326) umfasst, wobei das Bodengehäuse (326) mit einer Hülle des Leistungselements (310) feststehend verbunden ist und mit dem ersten Befestigungsabschnitt (110) verbunden ist; und
der Innenzahnkranz (325) und das Bodengehäuse (326) einstückig ausgebildet sind.

8. Mahlvorrichtung nach einem der Ansprüche 1 bis 7, ferner umfassend eine Halteanordnung (200), die mit dem ersten Befestigungsabschnitt (110) abnehmbar verbunden ist.

9. Mahlgerät, umfassend die Mahlvorrichtung nach einem der Ansprüche 1 bis 8.

10. Mahlgerät nach Anspruch 9, wobei das Mahlgerät eine Kaffeemühle, eine Bohnenmühle oder eine Pulverisierungsmühle umfasst.

## Revendications

1. Dispositif de broyage comportant :
un ensemble de broyage (100) comportant une première partie de montage (110), une première partie de broyage (120) et une deuxième partie de broyage (130) coopérant avec la première partie de broyage (120) pour exécuter le broyage ;
un ensemble de sortie de puissance (300) comportant un élément de puissance (310) et un mécanisme à engrenage planétaire (320), le mécanisme à engrenage planétaire (320) comportant une roue solaire (322), une roue planétaire (323), une roue à denture intérieure (325) et un cadre de fixation (321), la roue solaire (322) étant reliée à l'élément de puissance (310) par transfert de force, la roue planétaire (323) étant montée de manière rotative sur le cadre de fixation (321), et le cadre de fixation (321) ayant une partie de sortie (3215) configurée pour produire de la puissance ;
un ensemble de manipulation (400) relié à la première partie de montage (110),
dans lequel l'une parmi la première partie de broyage (120) et la deuxième partie de broyage (130) est reliée à la partie de sortie (3215) par transfert de force, et une autre parmi la première partie de broyage (120) et la deuxième partie de broyage (130) est montée sur l'ensemble de manipulation (400),
**caractérisé en ce que**,
la première partie de montage (110) est un boîtier inférieur creux (110a), et
le cadre de fixation (321) est situé dans une cavité du boîtier inférieur (110a) et est relié de manière rotative à la première partie de montage (110) par l'intermédiaire d'un palier (330).

2. Dispositif de broyage selon la revendication 1, dans lequel l'ensemble de broyage (100) comporte par ailleurs :
un pulvérisateur de poudre (140) relié à la partie de sortie (3215) par transfert de force, le pulvérisateur de poudre (140) étant agencé sous la première partie de broyage (120) et la deuxième partie de broyage (130), et le pulvérisateur de poudre (140), la première partie de broyage (120) et la deuxième partie de broyage (130) étant situés dans la cavité du boîtier inférieur (110a) ; et
un couvercle de blocage de poudre (160) relié au boîtier inférieur (110a) par encliquetage, le couvercle de blocage de poudre (160) étant agencé dans la cavité du boîtier inférieur (110a) et situé au-dessus du pulvérisateur de poudre (140).

3. Dispositif de broyage selon la revendication 2, dans lequel :
la première partie de broyage (120) est reliée à la partie de sortie (3215) par transfert de force, et le pulvérisateur de poudre (140) a une cavité de positionnement (141), la partie de sortie (3215) faisant saillie vers l'extérieur et s'étendant dans la cavité de positionnement (141) ; et
la première partie de broyage (120) a une cavité de limitation (121), et le pulvérisateur de poudre (140) est pourvu d'une partie de limitation (142) faisant saillie vers l'extérieur, la partie de limitation (142) s'étendant jusque dans la cavité de limitation (121).

4. Dispositif de broyage selon l'une quelconque des revendications 1 à 3, dans lequel l'ensemble de manipulation (400) comporte une deuxième partie de montage (410) et une partie de réglage (420) reliées de manière rotative l'une par rapport à l'autre, dans lequel :
la deuxième partie de montage (410) est au moins partiellement emboîtée de manière mobile dans la première partie de montage (110) ; et
la première partie de montage (110) est reliée par filetage à la partie de réglage (420).

5. Dispositif de broyage selon l'une quelconque des revendications 1 à 4, dans lequel la roue planétaire (323) comporte un engrenage primaire (3231) et un engrenage secondaire (3232) qui sont agencés de manière séquentielle dans une direction axiale, l'engrenage primaire (3231) étant mis en prise avec la roue solaire (3222), l'engrenage secondaire (3232) étant mis en prise avec la roue à denture intérieure (325), et l'engrenage primaire (3231) étant plus proche de la partie de sortie (3215) que l'engrenage secondaire (3232).

6. Dispositif de broyage selon la revendication 5, dans lequel :
le mécanisme à engrenage planétaire (320) comporte par ailleurs un axe de roue planétaire (324) ; et
la roue planétaire (323) a un trou traversant (3233) s'étendant dans la direction axiale, l'axe de roue planétaire (324) s'étendant de manière rotative jusque dans le trou traversant (3233) et étant relié de manière fixe au cadre de fixation (321).

7. Dispositif de broyage selon la revendication 5 ou la revendication 6, dans lequel :
le mécanisme à engrenage planétaire (320) comporte par ailleurs un boîtier inférieur (326), le boîtier inférieur (326) étant relié de manière fixe à une enveloppe de l'élément de puissance (310) et étant relié à la première partie de montage (110) ; et
la roue à denture intérieure (325) et le boîtier inférieur (326) sont formés d'un seul tenant.

8. Dispositif de broyage selon l'une quelconque des revendications 1 à 7, comportant par ailleurs un ensemble de support (200) relié de manière amovible à la première partie de montage (110).

9. Appareil de broyage, comportant le dispositif de broyage selon l'une quelconque des revendications 1 à 8.

10. Appareil de broyage selon la revendication 9, dans lequel l'appareil de broyage comporte un moulin à café, un moulin à grains ou un moulin à pulvériser.
